# EUROPEAN PATENT APPLICATION

(11) **EP 2 886 175 A1**
(43) Date of publication of application: **24.06.2015**
(21) Application number: 13198141.7
(22) Date of filing: 18.12.2013
(51) Int. Cl.: B01D 11/04, B01F 7/00, B01J 19/00

(54) **Counter-current extraction column with an agitating internal and a static internal**

(71) Applicant: Sulzer Chemtech AG, 8404 Winterthur (CH)
(72) Inventor: Wieland, Fredy, 68220 Hegenheim (FR); Koch, Jörg Dr., 79400 Kandern (DE); Goude, Ronan, 68220 Hagenthal le bas (FR)
(74) Representative: Manitz, Finsterwald & Partner GbR

(57) **Abstract**

A static internal (1) embodied so as to be suitable for improving a contact, heat transfer or mass transfer between the liquids in an agitated liquid-liquid contactor (3) having an metallic agitated internal (2).

The surface energy of the static internal (1) is < 40, preferably < 30, more preferably < 25, most preferably < 20 mN/m.

## Description

The invention relates to a static internal in accordance with the preamble of independent claim 1, use of one or more static internal in accordance with the preamble of independent claim 6, an agitated liquid-liquid contactor in accordance with the preamble of independent claim 7 and use of an agitated liquid-liquid contactor in accordance with the preamble of independent claim 12.

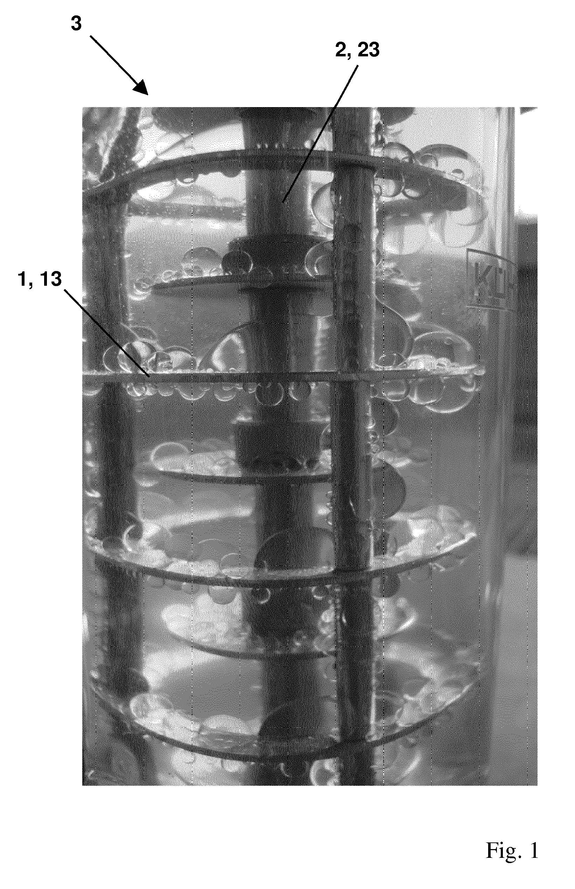

Fig. 1 schematically shows a picture of a state of the art agitated liquid-liquid contactor and relates to the cases when an aqueous phase is dispersed in a continuous organic phase. The figure show close observation of trials on a 60 mm pilot column. The liquids applied in these trial were pure technical grade dichloromethane as the continuous phase and an aqueous feed stream containing water > 20 wt.% of an organic component which is soluble in dichloromethane and > 20 wt.%. of an inorganic product. The flow rate of the dichloromethane was approx. 20 kg/h, the flow rate of the aqueous feed was approx. 10 kg/h in both set ups. Fig. 1 shows a dispersion of aqueous droplets in an organic phase using internals are all made of metall. It is seen that a large number of droplets stick to the plates 1, 13. These droplets are no longer transported through the contactor 3 and thus do not contribute to the overall mass transfer. They act as trapped liquid and only increase the local hold up. Disadvantage of the system is that the water droplets can't become fine enough and remain dispersed for longer periods of time. Therefore the contactor becomes very inefficient. In addition the hydrodynamic conditions in the extraction are worsened because of the droplets sticking to the internals.

Liquid-liquid contactors are well-known in the prior art. Different methods and apparatus are used to improve the quantity and / or quality of mass or heat transfer processes and apparatuses. Liquids in such a liquid-liquid contactor flow continuously and co-currently or counter-currently through one or more tower or column which may have specially designed internals mounted therein. Apparatus of this type comprise static internals, for example partition plates, and / or agitated internals, for example a shaft and agitators, for affecting the physical properties of the liquid and the hydrodynamic conditions. Sometimes structured packing also used to provide better contact between lighter rising liquids and heavier settling liquids, and better contact means higher efficiency.

Liquid-liquid contactors are generally constructed to provide descending heavy liquid flow from an upper portion of the contactor and ascending light liquid which has a lower density with respect to the heavy phase from a lower portion of the contactor. It has been found desirable in the liquid-liquid contact portion of the prior art to provide apparatus and methods affording efficient heat and / or mass transfer, or liquid-liquid contact, whereby contact of the fluids can be accomplished with a minimum pressure drop through a given zone of minimum dimensions. High efficiency and low pressure drop resulting in high specific throughput are important design criteria in liquid-liquid contact operations. Sufficient interfacial area for liquid-liquid contact is necessary for the primary function of heat and/ or mass transfer. With such apparatus, heavy and light constituents of the feed are recovered at the bottom and top of the tower, respectively.

Through agitator systems, the droplets of a first liquid are formed and remain dispersed in a second liquid for longer periods of time. One example of an active liquid-liquid contactor is shown in US 2,493,265. One aspect of the invention set forth in this reference comprises a substantially vertical column or chamber provided with a mixing section in which one or more agitators are installed to promote intimate contact between the liquids so as to cause equilibrium contact between them. Above and below the mixing chambers are calming sections where layers of fibrous packing, preferably of the self-supporting type, as for example, a roll of tubular knitted wire mesh, are mounted. As set forth in the Scheibel patent, the packing in the calming sections stops the circular motion of the liquids and permits them to separate. Thus, in the lower layer of packing, the heavier liquid settles out and flows downwardly, counter-currently to and through a rising stream of lighter liquid. Similarly, in the upper layer of packing the rising stream of lighter liquid flows counter-currently to and through a descending stream of heavier liquid. The agitators are mounted on a central shaft extending through the column and the shaft is rotated by any suitable device such as a motor. A more recent Scheibel patent design is set forth and shown in US 2,850,362. In this system, self-supporting wire mesh screen extending vertically through the entire calming section is again set forth and shown. Such agitated systems as described here are very complex and expensive to set up. Due to the existing mixing chambers and calming sections the height of the column is needless increased and the throughput is reduced. Furthermore the calming section is required because the necessary agitation is so intensive.

Another liquid-liquid contactor is disclosed in EP 0 543 552 B1. The example particularly relates to the so-called "Purex Process" for recovering uranium from waste or spent material containing unwanted contaminants, therefore a counter-current flow of streams of an aqueous phase and an organic phase passing through a fluid contacting extraction column. Thereby phase dispersing perforated plates are used having an upper peripheral edge being rounded in an elliptical contour for reducing coalescing of phase droplets passing therethrough. One aspect of the invention is that the liquids in the column are not agitated but typically pumped by pulse pumps or axial reciprocating dispersing plates to permit optimal droplet formation and coalescence on each plate. The phase dispersing plates could be constructed from non-wetting materials or plastics such as Teflon, if the aqueous phase is dispersed and the organic phase is continuous. This prevents the droplets of the aqueous phase from wetting the plates or column surface on contact. The major disadvantage of the system described in EP 0 543 552 B1 is that the system is not an agitated contactor, so that the droplets of the first liquid can't become fine enough and remain dispersed in the second liquid for longer periods of time. In addition the contactor becomes expensive to set up, since the use of pulsed pumps or axial reciprocating plates is complex.

Another example of an agitated extraction column is given in WO 97/10886. There an agitated column, in particular a counter-current, liquid-liquid extraction system is shown. Agitation devices are disposed within each of the mixing sections. Structured packing is mounted within the calming sections and between the mixing sections. The structured packing mounted within the calming sections comprises at least one layer of corrugated contact plates disposed in generally face-to-face relationship for facilitating the flow of liquid therebetween. The plates are foil-like and formed from metal or formed from or coated with a class of engineering plastics including Teflon and polypropylene. The WO97/10886 deals with an agitated column but also only mentions alternating section of structured packing between the agitators and claims plastic as material for the packing. Consequently the WO97/10886 shows the same disadvantages as the US 2,493,265. Both patents do not solve the problem of wetting of the static parts inside the liquid-liquid contactor by choosing an appropriate material of construction. Furthermore the agitated system is very complex and expensive to set up. Due to the existing mixing chambers and calming sections the height of the column is needless increased and the throughput is reduced.

It is therefore the object of the invention to provide static internals with an improved and effective design and its use and for improving a contact, heat transfer or mass transfer of the liquids in an improved agitated liquid-liquid contactor, that is efficient and operationally simple to use.

The subject matters of the invention satisfying this object are characterized by the features of the independent static internal claim 1, the independent use claim 6, the independent agitated liquid-liquid contactor claim 7 and the independent use claim 12.

The dependent claims relate to particularly advantageous embodiments of the invention.

According to the invention, this is achieved by a static internal embodied to be suitable for improving a contact, heat transfer or mass transfer between the liquids in an agitated liquid-liquid contactor having an metallic agitated internal. Thereby, the surface energy of the static internal is < 40, preferably < 30, more preferably < 25, most preferably < 20 mN/m.

According to the invention, this is achieved by use of one or more static internal(s) to improve the contact, heat transfer or mass transfer process in an agitated liquid contactor comprising agitated internals made of metal, wherein the static internal(s) are selected from a vortex breaker, distance sleeve and a partition plate, whereby the surface energy of the static internals is < 40, preferably < 30, more preferably < 25, most preferably < 20 mN/m.

The static internal is a non-moving part of the liquid-liquid contactor. The static internal can comprise one or several or all non moving parts of the liquid-liquid contactor. However, the static internal can also be any non-moving part, in particular a vortex breaker and / or distance sleeve and / or partition plate.

A property of the static internal can be the surface energy. As surface energy can be understood a property that quantifies the disruption of intermolecular bonds that occur when a surface is created. In the physics of solids, surfaces must be intrinsically less energetically favorable than the bulk of a material.

The surface energy may therefore be defined as the excess energy at the surface of a material compared to the bulk.

Surface energy is measured by sessile drop technique using Fowkes theory to determine the surface energy from contact angles of the polar liquid water and the non-polar liquid diiodomethane as probe liquids on a surface. The Sessile drop technique is a method used for the characterization of solid surface energies, and in some cases, aspects of liquid surface energies. The main premise of the method is that by placing a droplet of liquid with a known surface energy, the shape of the drop, specifically the contact angle, and the known surface energy of the liquid are the parameters which can be used to calculate the surface energy of the solid sample. The liquids used for such experiments is referred to as the probe liquids, for example, water and diiodomethane. Contact angle is measured by using a contact angle goniometer using an optical subsystem to capture the profile of the liquid on the solid substrate. The angle formed between the liquid/solid interface and the liquid/vapor interface is the contact angle. A standard method of measuring the contact angle on plastic surfaces is provided by ISO 15989. Further known representative methods include DIN EN 328 for glues and ASTM D 724-94 for wettability of paper.

The surface energy of the static internal is < 40, preferably < 30, more preferably < 25, most preferably < 20 mN/m. Therefore the static internal as employed in this invention should be constructed of or coated with non-wetting material, typically plastics. This advantageously prevents droplets, for example aqueous droplets, of a first liquid or second liquid from wetting the static internals on contact. In addition, this prevents droplet coalescence, increases the specific interfacial area and thus the separation performance increases. Furthermore, one of the advantages due to usage of the static internal with low surface energy is better contact of the first and second fluid and better contact means higher efficiency.

The agitated liquid-liquid contactor can be a tower or a column. One or more static internal(s) can be disposed in the agitated liquid-liquid contactor as well as one or more agitated internal(s). The static internal can comprise one or several or all non-moving parts of the liquid-liquid contactor. The agitated internal can comprise one or several or all moving parts of the liquid-liquid contactor. The agitated internals can be mounted on a central shaft extending through the column and the shaft can be rotated by any suitable device such as a motor. Agitation of the agitated internals in the present invention can be understood as radial motion of the moving parts. Agitation in the present invention excludes an axial motion, in particular pulsing of pulse pumps or reciprocating of axial reciprocating internals.

In some embodiments of the invention, the agitated liquid-liquid contactor will lack calming sections. Due to the beneficial effects of the static internals of the present invention in improving the contact, heat transfer or mass transfer in the agitated contactor, for example, by promoting the dispersion of droplets in the contactor, calming sections will often not be required, thus minimizing cost and complexity of the contactor and contacting process.

The agitated liquid-liquid contactor generally comprises a counter-current flow of streams of an first liquid, in particular an aqueous phase, and a second liquid, in particular an organic phase, with a first inlet for the first liquid and a first outlet for the second liquid located in an upper area of the contactor. Furthermore the contactor comprises a second outlet for the first fluid and second inlet for the second fluid located in a lower area thereof. Thus, a descending flow of a first liquid, in particular a heavy liquid, takes place from an upper portion of the contactor and ascending flow of a second liquid, in particular a light liquid, from a lower portion of the contactor. The agitated liquid-liquid contactor can establish contact between the first and second fluid to enable heat transfer or mass transfer between the first and second liquid. Often in agitated liquid-liquid contactors an organic phase is dispersed into a continuous aqueous phase. This invention in particular relates to the cases in which an aqueous phase has to be dispersed in a continuous organic phase.

According to a preferred embodiment the static internal is a vortex breaker and / or distance sleeve and / or partition plate. Vortex breaker and / or distance sleeve and / or partition plate are non moving parts of the agitated liquid-liquid contactor. Nevertheless the static internal can comprise other non-moving parts. The static internal can be part of an agitating zone of the agitated liquid-liquid contactor. However, advantageously such static internals provide sufficient separation performance. The static internals can be easily manufactured and already existing static internals can be replaced, since a high mechanical robustness is not required. In addition, a further advantage is that this reduces costs and makes the static internals cheaper.

The static internals of the present invention, in particular the vortex breaker and / or distance sleeve and / or partition plate, are not structured packing or parts of structured packing and also not random packing. Structured packing and random packing is generally used in passive liquid-liquid contactors (no mechanically induced agitation) or in the calming zone of agitated liquid-liquid extraction contactors. However structured packing and also not random packing do not provide sufficient separation performance and therefore agitated liquid-liquid contactors with static internals have to be used.

A further embodiment of the invention is that the static internal comprises a plastic or a ceramic or a glass surface and / or the static internal consists of plastic or ceramic or glass. According to another preferred embodiment the plastic is a flouropolymer. The static internals can be coated or laminated with plastic or a ceramic or a glass surface. This is a more economical solution for providing a low energy surface. Likewise the static internal can consist of plastic or ceramic or glass. Advantageously thereby the static internals can be easily manufactured and have a greater durability. This is the most economical solution in avoiding the requirement for coating or laminating Static internals as employed in this invention can be constructed of material with surface energy is < 40, preferably < 30, more preferably < 25, most preferably < 20 mN/m. Therefore, the static internal can be coated or consist of plastic, in particular PTFE or ETFE or FEP, that is used in a static contactor. In some embodiments the plastic will be a plastic other than PVDF. For some applications, PVDF has disadvantages of higher cost, higher swelling and solubility, poorer chemical resistance and lower melting point versus perfluorinated plastics such as PTFE. As a result, in an agitated liquid-liquid contactor with static internals can be made of such plastics and the agitated internals are made of metal such as stainless steel or glass. Advantageously, this prevents the agitated liquid-liquid contactor, in particular the static internal, from being wetted by droplets of the first fluid, in particular a dispersed aqueous phase. Furthermore, these flouropolymer are the lowest surface energies polymers with a good chemical resistance.

In addition, the object is accomplished according to the present invention by an agitated liquid-liquid contactor comprising a metallic agitated internal and a static internal. The agitated liquid-liquid contactor is adapted for the flow of liquids therein, whereby the liquids flow in a counter-current flow of streams and said agitated liquid-liquid contactor comprises:
- a substantially vertical column having a central axis therethrough,
- a agitated internal disposed within of said contactor,
- a first outlet for a first fluid and a second inlet for a second fluid located in an upper area of the column,
- and a second outlet for the second fluid and a first inlet for a first fluid located in a lower area thereof.

The agitated liquid-liquid contactor generally is used with a counter-current flow of streams of a first liquid and a second liquid. The agitated liquid-liquid contactor can comprise a column or tower, in particular a substantially vertical column having a central axis therethrough. The agitated liquid-liquid contactor can be sub-divided into one or more sections, in particular horizontal sections, thus a series of identical stages. The agitated liquid-liquid contactor can be sub-divided into a plurality of separate sections by the static internals, for instance by a flat, annular and / or perforated, horizontal partition plate positioned at spaced intervals along the interior wall of the contactor. Said static internals separating the column into sections communicating for instance through a central openings or perforation in said static internal. A section itself can be sub-divided into one or more zones, for example a mixing zone and / or a separating zone. In the mixing zone, the agitated internals thoroughly can blend the first and the second liquid; in contrast in the separating zone the liquids separate by reason of their different specific weight. The agitated liquid-liquid contactor can comprise a shaft that can extend down the central axis of the contactor. Agitated internals, for example vertical blade agitators, turbines or paddles, can be mounted on said shaft and extending outward from the shaft, in particular extending radially.

The agitated liquid-liquid contactor can comprise a driving means for rotating the shaft, for instance a drive motor for powering mixing of the first and the second fluid. The drive motor can have a variable speed and be disposed for example at the top of the agitated liquid-liquid contactor. Besides, the drive motor can rotate the shaft, whereby the agitated internals can generate the agitation of the liquids as the liquids pass in counter-current flow therethrough. The agitated internals, in particular vertical blades or turbines assembled to paddles, can create agitation with a non-vertical thrust. The agitation imparted thereto is designed to reduce the size of liquid droplets dispersed into another continuous phase liquid. Agitation from agitated internals has been shown to produce sufficiently dispersed droplet configuration in such assemblies. The typical droplet diameter can be 2-3 mm but should not be <1mm.

The static internal can be disposed within the agitated liquid-liquid contactor, whereby the static internal comprise one or several or all non-moving parts of the agitated liquid-liquid contactor, in particular a vortex breaker and / or distance sleeve and / or partition plate. The static internals improve the contact, heat transfer or mass transfer process in an agitated liquid contactor.

According to the invention the agitated liquid-liquid contactor is a reaction or extraction or mass transfer column. Both contacting applications, the reaction or extraction column, can involve transfer of reactants or mass across the interface. Besides the agitated liquid-liquid contactor is a RDC column or a Kühni column or a QVF-Rührzellen-Extraktor or a Scheibel column.

According to the invention the agitated internals are made of metal. A material the agitated liquid-liquid contactor as well as the static and agitated internal are made of depends upon whether or not the organic or aqueous phase is dispersed within the other. Corresponding to our invention the aqueous phase is dispersed and the organic phase is continuous, that is why the agitated internals are made of metal, for example steel or stainless steel and static internals and / or the contactor can be coated with or consist of plastic, in particular PTFE or ETFE or FEP. In some embodiments the plastic will be a plastic other than PVDF. Advantageously this prevents the droplets of the aqueous phase from wetting the static internal or column surface on contact.

The invention further relates to use of an agitated liquid-liquid contactor in a contact or heat transfer or mass transfer process, in particular in a liquid-liquid extraction process. The heat transfer or mass transfer process, in particular in a liquid-liquid extraction process, is a standard application of two phase contact. Advantageously the use of the agitated liquid-liquid contactor, in particular a static internal, according to the invention makes the heat transfer or mass transfer process, in particular in the liquid-liquid extraction process more efficient, thus the throughput is higher and the separation performance is improved.

According to the invention the liquid-liquid extraction process comprises two liquid phases and the two phases have an interfacial tension of at least 1 mN/m, preferably more than 5 mN/m. One phase is an aqueous phase and a second phase is an organic phase having typically interfacial tension of 10-30 mN/m. A common technique to measure the interfacial tension is the drop volume method similar to ASTM D2285-99.

According to the invention the static internal has a static contact angle >30, preferably 60, more preferably > 90 degree with a dispersed phase. The contact angle can be defined as the angle between solid sample's surface and the tangent of the droplet's ovate shape at the edge of the droplet. A high contact angle indicates a low solid surface energy or chemical affinity. This is also referred to as a low degree of wetting. A low contact angle indicates a high solid surface energy or chemical affinity, and a high or sometimes complete degree of wetting. Advantageously the static internal has a high contact angle, this indicates a low solid surface energy or a low degree of wetting.

Further advantageous measures and preferred method embodiments result from the dependent claims.

The invention will be explained in more detail in the following both in an apparatus respect and in a process engineering aspect with reference to embodiments and to the drawing. There are shown in the schematic drawing:
- Fig. 1: schematically shows a picture of a state of the art agitated liquid-liquid contactor;
- Fig. 2: schematically shows a detailed drawing of a first embodiment of the agitated liquid-liquid contactor;
- Fig. 3: schematically shows a detailed drawing of the static and agitated internals in accordance with the present invention;
- Fig. 4: schematically shows a picture of the agitated liquid-liquid contactor in accordance with the present invention.

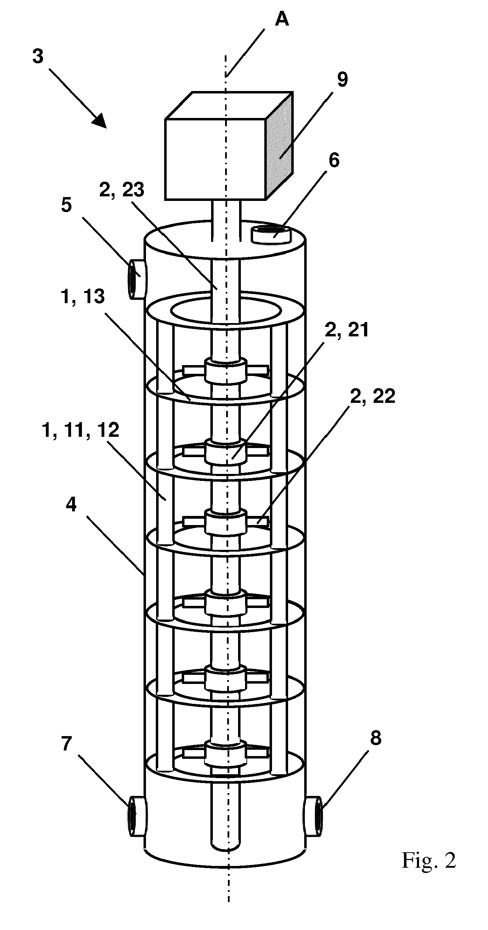

Referring to Fig. 2 there is shown schematically a detailed drawing of a first embodiment of the agitated liquid-liquid contactor. The agitated liquid-liquid contactor 3, for instance a column or a tower, has a vertical cylindrically shape closed at top and bottom. Mounted centrally through the entire length of the contactor 3 along an axial centrally axis A is an agitated internal 2, a rotatable shaft 2 seated in top bearing (not shown). The shaft 2, 23 extends through a bearing in the top of the contactor 3 for connection with a driving means, in particular a variable speed drive motor 9 disposed thereabove. Mounted on the rotatable shaft 2, 23, at spaced intervals, are radial horizontally extending further agitated internals 2, in particular stirrers, turbines, discs or agitators. The agitated internals 2 are preferably turbine type agitators with fins or blades 22 and guiding plates (not shown on the drawing) along the periphery of a rotatable horizontal plate 21. The number of fins 22 on-each agitator 2 may vary. Two to eight, preferably four to six, fins 22 are conveniently used. The fins or blades 22 have no pitch so as to impart only horizontal flow to the fluids. Rotation of the agitators in each section is effected by coupling the shaft 2, 23 on which the agitated internals 2 are mounted to a drive motor 9 through a mechanical gear (not shown). The agitated liquid-liquid contactor 3 is preferably divided into a section 10. In this particular side elevational, cross-sectional view, the sections 10 are shown in less detail. Each section 10 is limited and defined by two static internals 1, the static partition plates 1, 13. A height and therefore the section 10 is defined by a distance sleeve 11. Each section 10 is separated from the adjacent section by static partition plates 1, 13 that can be mounted against the contactor wall 4. An outside diameter of static partition plates 1, 13 is approximately the same as an inside diameter of the contactor 3.

These annular static partition plates 1, 13 are positioned above and below the agitated internals 2 in each section 10 and control the flow of the liquids. The static partition plates 1, 13 have a central opening to accommodate the rotating shaft 2, 23 and are mounted in the central zone along the axis A of the contactor 3. In other typical embodiments of the invention the partition plates 1, 13 have additional perforations. Sufficient clearance is maintained in the central opening and in the vicinity of the contactor wall 4 so as to provide a free area for smooth flow of liquid around the plate 1, 13 in the manner illustrated in Figure 2. The static partition plates 1, 13 may be installed on vertically extending distance sleeve 1, 12. The contactor 3 is equipped with a first outlet 5 for a first fluid and a second inlet 6 for a second fluid located in an upper area of the contactor 3 and a second outlet 7 for the second fluid and a first inlet 8 for a first fluid located in a lower area thereof. Additional liquid inlets or outlets may be inserted at any point in the column, if desired. In addition, access ports may also be inserted at appropriate points in the top or side walls of the contactor 3 in any number desired. Sight glasses and liquid level gauges (not shown) may also be included in the structure. The contactor 3 can be constructed in sub-assembly units which are joined by flanges. The invention, however, is not restricted to the particular combination of structural features illustrated in each of the figures.

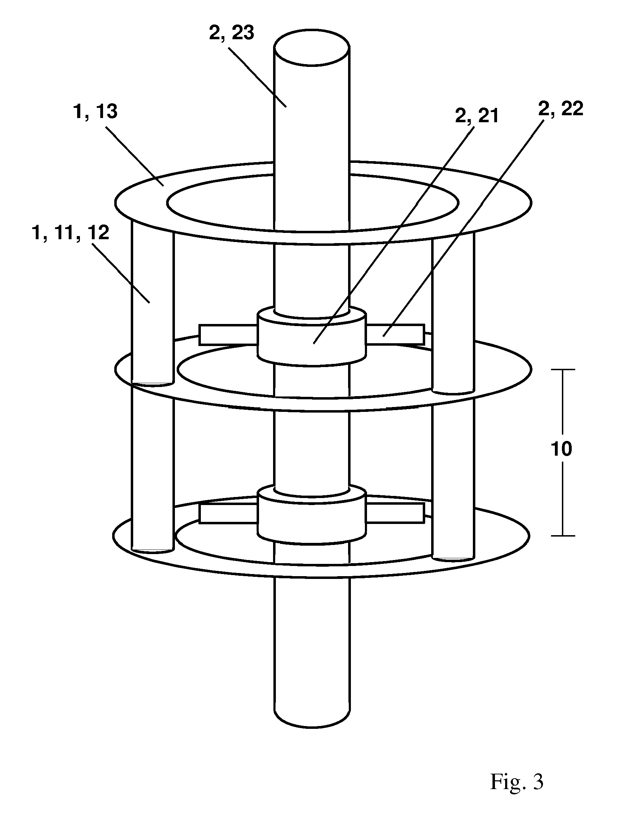

Fig. 3 schematically shows a detailed drawing of the static and agitated internals in accordance with the present invention. Fig. 3 substantially corresponds to Fig. 2. Fig. 3 shows, mounted on the rotatable shaft 2, 23 , at spaced intervals, are radial horizontally extending further agitated internals 2, in particular stirrers or agitators. The agitated internals 2 are preferably turbine type agitators with fins or blades 22 along the periphery of a rotatable horizontal plate 21. The agitated liquid-liquid contactor 3 is divided into a section 10, shown in detail. Each section 10 is limited and defined by two static internals 1, the static partition plates 1, 13. The height and therefore the section 10 is defined by a distance sleeve 11. Each section 10 is separated from the adjacent section by static partition plates 1, 13.

The agitated internals 2 and the distance sleeves between the partition plates are in the region of the vortex flow pattern. So both parts are well flown around with the continuous phase. If droplets start to wet these parts they will be flushed away. To maintain the droplet dispersion inside the extraction column, the static internals should have a low wettability and large contact angle with the dispersed droplet phase. Merging this requirement with the above mentioned wettability of plastic and metal, a dispersion containing organic droplets in a continuous aqueous phase should be applied in a column with metal internals. For a dispersion of aqueous droplets in a continuous organic phase, the static parts should be made of plastic.

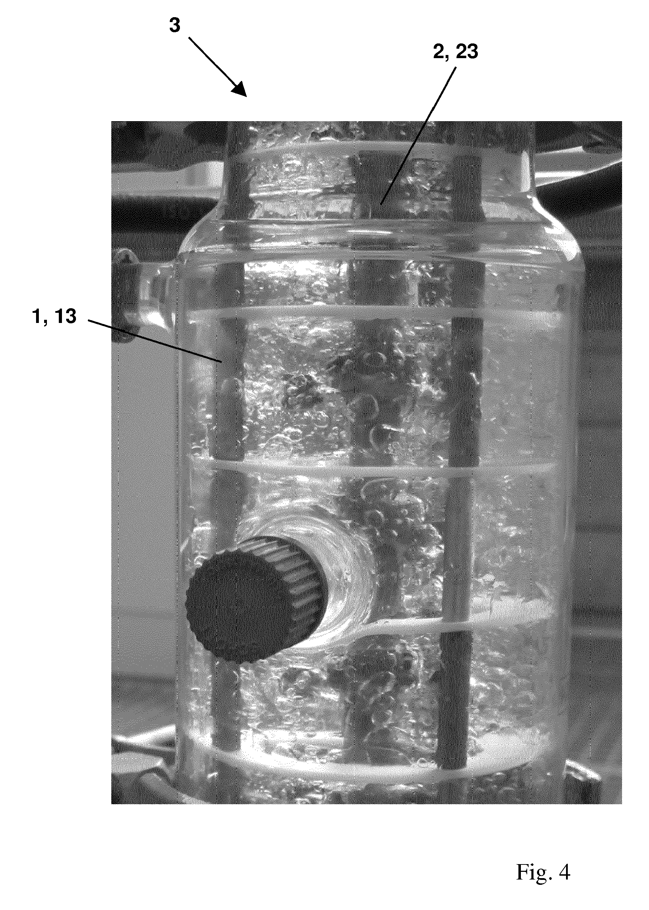

Referring to Fig. 4, Fig. 4 shows a picture of the agitated liquid-liquid contactor in accordance with the present invention. Fig. 4 relates to the cases when an aqueous phase is dispersed in a continuous organic phase. The liquids applied in these trials were pure technical grade dichloromethane as the continuous phase and an aqueous feed stream containing water > 20 wt.% of an organic component which is soluble in dichloromethane and > 20 wt.%. of an inorganic product. The flow rate of the dichloromethane was approx. 20 kg/h, the flow rate of the aqueous feed was approx. 10 kg/h in both set ups. The figure show close observation of trials on a 60 mm pilot column. The partition plates 1, 13 are the main part to promote wetting and coalescence. To verify the impact of these partitions 1, 13 plates, the metal static internals 1 are replaced by plastic static internals 1. Astonishingly, by changing the static internals 1 the wetting behavior is substantially improved. Advantageously, the static internals 1 are easy to replace without having to tackle the challenges of plastic agitated internals 2. Fig. 4 shows a dispersion of aqueous droplets in an organic phase using static internals 1 made of plastic. It is observed that almost no droplet sticks to the plates 1, 13 and the flow pattern inside the column is visually improved.

## Claims

1. A static internal (1) embodied so as to be suitable for improving a contact, heat transfer or mass transfer between the liquids in an agitated liquid-liquid contactor (3) having an metallic agitated internal (2),
**characterized in that** the surface energy of the static internal (1) is < 40, preferably < 30, more preferably < 25, most preferably < 20 mN/m.

2. Static internal (1) according to claim 1, wherein the static internal (1) is a vortex breaker (11) and / or distance sleeve (12) and / or partition plate (13).

3. Static internal (1) according to any of the preceding claims, wherein the static internal (1) comprises a plastic or a ceramic or a glass surface.

4. Static internal (1) according to any of the preceding claims, wherein the static internal (1) consists of plastic or ceramic or glass.

5. Static internal (1) according to claim 3 or 4, wherein the plastic is a flouropolymer.

6. Use of one or more static internal(s) (1) to improve the contact, heat transfer or mass transfer process in an agitated liquid-liquid contactor (3) comprising agitated internals (2) made of metal,
wherein the static internal(s) (1) are selected from a vortex breaker (11), distance sleeve (12) and a partition plate (13),
**characterized in that** the surface energy of the static internals is < 40, preferably < 30, more preferably < 25, most preferably < 20 mN/m.

7. An agitated liquid-liquid contactor (3) comprising a metallic agitated internal (2) and a static internal (1) according to any one of claims 1 to 5.

8. An agitated liquid-liquid contactor (3) according to claim 7, whereby the agitated liquid-liquid contactor (3) is adapted for the flow of liquids therein, whereby the liquids flow in a counter-current flow of streams and said agitated liquid-liquid contactor (3) comprises:
a substantially vertical column (4) having a central axis (A) therethrough,
an agitated internal (1) disposed within of said contactor (3),
a first outlet (5) for a first fluid and a second inlet (6) for a second fluid located in an upper area of the column,
and a second outlet (7) for the second fluid and a first inlet (8) for a first fluid located in a lower area thereof.

9. An agitated liquid-liquid contactor (3) according to claim 7 or 8, wherein the agitated liquid-liquid contactor (3) is a reaction or extraction or mass transfer column.

10. An agitated liquid-liquid contactor (3) according to any one of claims 7 to 9, wherein the agitated liquid-liquid contactor (3) is a RDC column or a Kühni column or a QVF-Rührzellen-Extraktor or a Scheibel column.

11. An agitated liquid-liquid contactor (3) according to any one of claims 7 to 10, wherein the agitated internals (2) are made of metal.

12. Use of an agitated liquid-liquid contactor (3) of any one of claims 7 to 11 in a contact or heat transfer or mass transfer process.

13. Use of an agitated liquid-liquid contactor (3) according to claim 12, wherein the use is a liquid-liquid extraction process.

14. Use of an agitated liquid-liquid contactor (3) according to claim 12 or 13, wherein the liquid-liquid extraction process comprises two phases and the two phases have an interfacial tension of at least 1 mN/m, preferably more than 5 mN/m.

15. Use of an agitated liquid-liquid contactor (3) in accordance with any one of the claims 12 to 14, wherein one phase is an aqueous phase and a second phase is an organic phase have an interfacial tension of 10-30 mN/m.

16. Use of an agitated liquid-liquid contactor (3) in accordance with any one of the claims 12 to 15, wherein the static internal (1) has a static contact angle >30, preferably 60, more preferably > 90 degree with a dispersed phase.
